# EUROPÄISCHE PATENTSCHRIFT

(11) **EP 0 530 553 B1**
(45) Veröffentlichungstag und Bekanntmachung des Hinweises auf die Patenterteilung: **28.05.1997**
(21) Anmeldenummer: 92113721.2
(22) Anmeldetag: 12.08.1992
(51) Int. Cl.: G08C 25/02

(54) **Betrieb eines Systems mittels einer Fernbedienung**
Operating a system with remote control
Opération d'un système avec commande à distances

(30) Priorität: 31.08.1991 DE 4128974
(43) Veröffentlichungstag der Anmeldung: 10.03.1993
(73) Patentinhaber: TEMIC TELEFUNKEN microelectronic GmbH, 74072 Heilbronn (DE); DELCHI/CARRIER S.P.A., I-20058 Villasanta (Milano) (IT)
(72) Erfinder: Seebeck, Carsten, W-8071 Wettstetten (DE); Zirngibl, Michael, W-8425 Neustadt/Donau (DE); Canesi, Fabrizio, I-20052 Monza (MI) (IT); Colombo, Guglielmo, I-22064 Casatenovo (CO) (IT)
(74) Vertreter: Maute, Hans-Jürgen, Dipl.-Ing.

(56) Entgegenhaltungen:
- EP-A- 0 320 439
- WO-A-91/03038
- DE-A- 3 508 562
- FR-A- 2 375 674
- FR-A- 2 380 606
- ELEKTRONIK Bd. 30, Nr. 20, 1981, München, DE, SS. 74-76; A. RÜTTIGER: 'Infrarot-Fernbediensystem mit Microcomputer'

## Beschreibung

Von Fernbedienungen gesteuerte Systeme - beispielsweise Fernsehgeräte, Videorecorder, HiFi-Anlagen etc. - werden üblicherweise mit Hilfe von Kabelfernbedienungen oder kabellos im Ein-Wege-Modus betrieben, d. h. beim Betätigen der Fernbedienung (Tastendruck) erfolgt unmittelbar eine Reaktion des Systems. Der Benutzer muß sich - beispielsweise mittels einer Display-Anzeige des Geräts - am System selbst über die eingestellten Daten informieren bzw. mittels der Anzeige vorgenommene Änderungen kontrollieren; dies ist jedoch nur dann möglich, wenn ein guter visueller Kontakt zur Anzeigevorrichtung vorhanden ist.
Bei größeren Entfernungen vom Bediener zum Gerät oder bei fehlender Anzeige ist keinerlei optische Rückmeldung möglich. Außerdem entspricht die aktuelle Anzeige nicht immer unbedingt auch dem momentanen Zustand des Systems; beispielsweise kann eine vorgenommene Änderung am Gerät zwar angezeigt werden, wurde aber aufgrund von Übertragungsfehlern gar nicht ausgeführt oder eine bereits angezeigte Änderung ist - bei Änderungen mit großer Zeitkonstante - noch gar nicht erfolgt.

DE-A-35 08 562 zeigt ein Verfahren zum Betrieb einer Fernbedienung, bei dem das Gerät die von der Fernbedienung empfangenen Steuerdaten an diese zurücksendet. Die Fernbedienung wartet auf diese Rücksendung. Falls diese nicht empfangen wird, wird der Befehl nochmals übertragen.

Der Erfindung liegt die Aufgabe zugrunde, den Betrieb von Systemen mit Fernbedienungen dahingehend zu verbessern, daß der Benutzer immer über den aktuellen Zustand des Systems informiert ist und darüber, ob der Befehl richtig empfangen wurde, wobei gleichzeitig der Bedienkomfort verbessert wird.
Diese Aufgabe wird erfindungsgemäß durch die Merkmale im Kennzeichen des Anspruchs 1 gelöst.
Vorteilhafte Weiterbildungen ergeben sich aus den Unteransprüchen.

Die Kommunikation bzw. der Datenaustausch zwischen der Fernbedienung (bzw. dem Geber der Fernbedienung) und dem System (dem Gerät) erfolgt erfindungsgemäß im bidirektionalen Zwei-Wege-Modus - die aktuellen Daten des Systems werden bei einer Betätigung der Fernbedienung bzw. des Gebers an diesen zurückgesendet; gewünschte Änderungen am System werden erst dann ausgeführt, wenn diese geprüft und als fehlerfrei erkannt wurden. Mit dieser Übertragungsphilosophie wird sichergestellt, daß der Benutzer zu jedem Zeitpunkt der Kommunikationsphase den aktuellen Betriebszustand des Systems kennt und falsche bzw. fiktive Eingaben vermieden werden.
Der zeitliche Ablauf der Übertragung sieht vor, daß dem System zunächst die Benutzeranforderungen mittels einer Übertragungsstrecke - beispielsweise im IR- oder HF-Bereich - mitgeteilt werden; vom System werden die empfangenen Daten geprüft und decodiert, anschließend wird mittels der gleichen Übertragungsstrecke (Rückkanal) der gesamte Status des Systems einschließlich der empfangenen Steuerdaten zurück zum Geber gesendet. Dieser wertet die vom System empfangene Information aus; bei fehlerfreien Daten sendet der Geber nun ein Quittierungs-Kommando zum System, das den Steuerungsrechner des Systems (erst jetzt) veranlaßt, die vom Geber übermittelten Daten zu akzeptieren. Die aktuellen Systemdaten können optional - beispielsweise mittels eines im Geber der Fernbedienung integrierten kundenspezifischen Displays - dem Benutzer visuell zugänglich gemacht und beispielsweise in einem EE-PROM gespeichert werden. Bei einer fehlerfreien Übertragung kann eine akustische Meldung erfolgen; weiterhin kann ein Notschalter vorgesehen werden, mit dessen Hilfe beim Ausfall der Fernbedienung Standarddaten bzw. Mittelwerte zum System gesendet werden. Die geräteinterne Datenübertragung vom Empfangsteil zum angeschlossenen Peripheriegerät, beispielsweise einem Rechner, kann über einen seriellen Bus erfolgen.
Da dem Benutzer alle veränderbaren Systemgrößen als momentane Istwerte unmittelbar zugänglich sind beispielsweise auf dem Display der Fernbedienung -, wird der Bedienkomfort beim Betrieb des Systems wesentlich erhöht; außerdem können nunmehr Systeme bzw. Geräte für den Betrieb mit Fernbedienungen zugänglich gemacht werden, bei denen dies bisher nicht möglich war. Auf der Anzeige wird immer der aktuelle Systemzustand ausgegeben, so daß einerseits Unsicherheiten über den momentanen Status des Systems bzw. die aktuellen Systemwerte ausgeräumt werden und andererseits bei vorgenommenen Änderungen fiktive oder fehlerhafte Eingaben oder Übertragungsfehler weitgehend ausgeschlossen sind, wodurch auch die Sicherheit wesentlich verbessert wird.

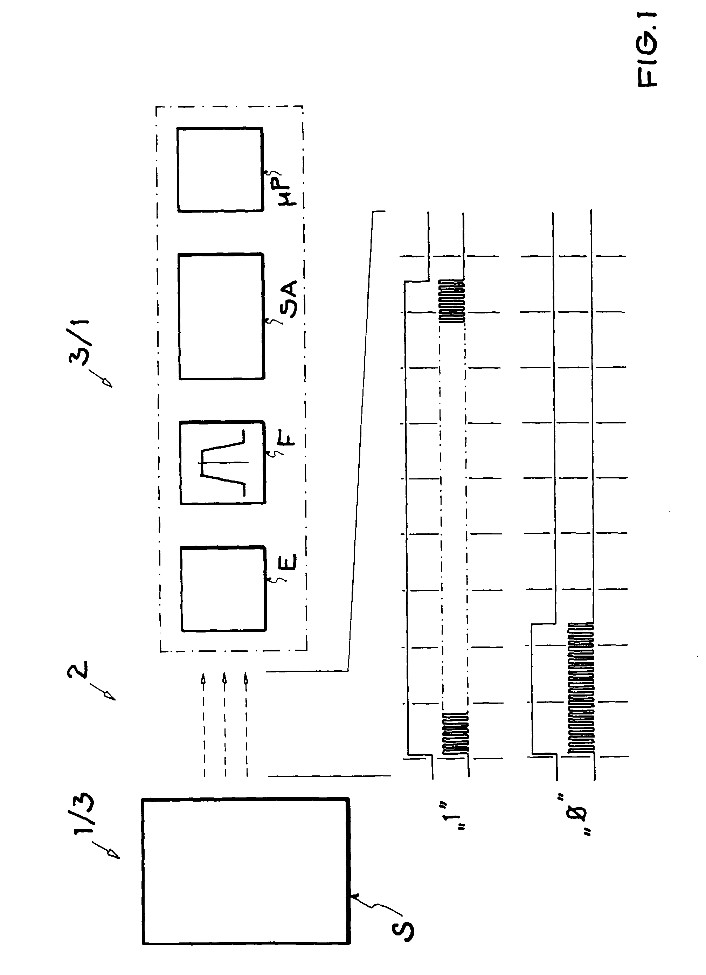

Das Übertragungsverfahren - Sende- und Empfangsprinzip sowie die Decodierung - soll im folgenden anhand der Figur 1 am Beispiel einer IR-Übertragung erläutert werden. Dabei kann sowohl die Fernbedienung 1 als auch das System 3 als Sender bzw. Empfänger fungieren:
a) Sendeprinzip:
   Vom Geber der Fernbedienung 1 wird über die IR-Strecke 2 eins von vier möglichen Datenwörtern zum System 3 gesendet; das jeweilige Datenwort wird dabei in Abhängigkeit des internen Zustands bzw. des momentanen Status des Gebers gewählt. Vom Sender des Systems kann dagegen nur ein Datenwort - die aktuellen Systemdaten bzw. der Status des Systems - gesendet werden. Die Trägerfrequenz für die übertragenen Daten liegt sehr hoch - beispielsweise beträgt diese für die Infrarot-Übertragung 400 kHz. Die Informationseinheiten werden Bit-codiert, wobei die Pulslängen der Trägerfrequenzpulse den jeweiligen Bitwert ("1" oder "0") charakterisieren. Der Bit-Abstand beträgt beispielsweise 1 ms, so daß eine hohe Übertragungsgeschwindigkeit möglich ist.
b) Empfangsprinzip:
   Die Empfangstelegramme, d. h. die im Empfänger E des Systems 3 bzw. der Fernbedienung 1 eintreffenden Pulsfolgen - im angeführten Beispielsfall die IR-Impulse -, werden nach einer automatischen Lautstärkeregelung mittels des Filters F gefiltert. Folglich können nur Frequenzen des Sendefrequenzspektrums passieren und weiterverarbeitet werden; Störsignale - beispielsweise Signale anderer IR-Quellen - werden dadurch wirksam unterdrückt. Die Signalaufbereitungsstufe SA integriert die empfangenen Impulse auf, wobei nach Überschreiten einer Mindestzahl von Impulsen der Ausgang der Signalaufbereitungsstufe SA von High nach Low umschaltet; dieser bleibt solange im Low-Zustand, bis keine Impulsfolgen mehr empfangen werden. Durch die Umschalt-Flanke am Ausgang der Signalaufbereitungsstufe SA wird im Mikroprozessor µP ein Interrupt ausgelöst; der Mikroprozessor µP liest in der Interrupt-Routine den Pegel am Ausgang der Signalaufbereitungsstufe SA mehrmals ein (Entprellen) und weist - je nach Einleseergebnis - dem Empfangsbit den logischen Wert "0" oder "1" zu. Während der Übertragung werden mehrere Kontrollmechanismen - beispielsweise Bildung einer Prüfsumme, Überprüfen der Datenwörter (Länge ...), Codierung - eingesetzt, die das Datentelegramm überprüfen. Nach Erkennen des Übertragungsendes wird die Information nochmals geprüft, decodiert und ausgewertet.

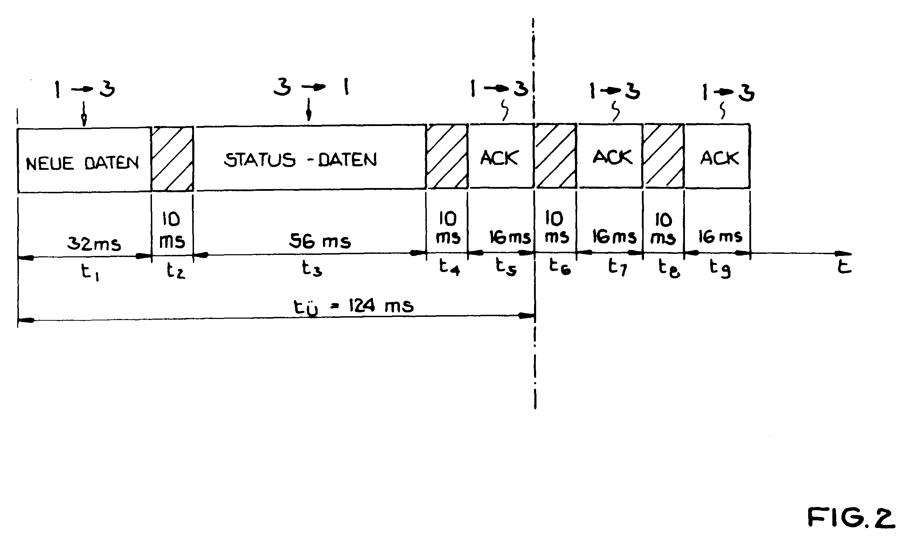

Ein Timing-Diagramm für eine bidirektionale (Infrarot-) Übertragung ist in der Figur 2 dargestellt.
- Zeitintervall t₁: Vom Geber wird - je nach Status - eines von folgenden vier möglichen Datenwörter gesendet (1 → 3): Einschaltvorgang (Power-on), Display-Update (letzter aktueller Stand des Systems), neue Steuerdaten für das System (zu ändernde Systemdaten) oder der Quittierungsbefehl (Acknowledge-Kommando). Beim Ausführungsbeispiel der Figur 2 werden beispielsweise neue Steuerdaten während des Zeitintervalls t₁ (beispielsweise 32 ms) zum System gesendet.
- Zeitintervall t₂: Während dieses Zeitintervalls (beispielsweise 10 ms) dürfen keine weiteren Impulse vom Empfangsteil des Systems erkannt werden; gleichzeitig werden die Empfangsdaten geprüft und die entsprechenden Sendedaten des Systems zusammengestellt.
- Zeitintervall t₃: Das System 3 sendet seine momentanen Ist-Werte (Status-Daten) zum Geber (3 → 1), wobei die Daten Code-optimiert werden - die Bitlänge einzelner übertragener Systemgrößen wird dadurch beschränkt.
- Zeitintervall t₄: Während dieses Zeitintervalls (beispielsweise 10 ms) dürfen keine weiteren Impulse vom Empfangsteil des Gebers erkannt werden; gleichzeitig werden die Empfangsdaten geprüft. Bei einem fehlerfreien Empfang werden das Acknowledge-Kommando bereitgestellt und die aktuellen Systemdaten auf dem Display dargestellt.
- Zeitintervalle t₅, t₇, t₉: Während dieser Zeitintervalle (beispielsweise 10 ms) wird vom Geber der Fernbedienung 1 - dreimal hintereinander - das Quittierungs-Kommando (Acknowledge-Kommando ACK) zum System 3 gesendet. Falls eines dieser Kommandos vom Empfangsteil des Systems 3 korrekt empfangen wird, werden alle folgenden Acknowledge-Kommandos ACK ignoriert; die während des Zeitintervalls t₁ gesendete Information (neue Systemdaten) wird erst zu diesem Zeitpunkt in den Datenbereich des Systems übernommen und dort abgespeichert. Die Übertragungszeit t_{Ü} beträgt bei einer fehlerfreien Übertragung somit beispielsweise 124 ms.
- Der jeweilige Sender eines Datentelegramms wartet bis zu 15 ms auf eine Antwort des korrespondierenden Empfängers; falls dieser keine Antwort sendet - dies ist dann der Fall, wenn das vorhergehende Datentelegramm fehlerhaft übertragen bzw. empfangen wurde -, überträgt der jeweilige Sender sein Datentelegramm noch einmal zum Empfänger. Dieser Vorgang kann bis zu dreimal wiederholt werden, so daß die Gesamt-Übertragungszeit maximal 360 ms beträgt.

Vorzugsweise wird die bidirektionale Datenübertragung bei Systemen bzw. Geräten ohne visuellen Kontakt vom Bediener zum System eingesetzt, oder bei Systemen, die kein Display bzw. keine Anzeige aufweisen - beispielsweise Systeme in der Meß- und Regeltechnik, wobei besonders hier die Anzeige verifizierter aktueller Systemwerte zur Überwachung des Systems vorteilhaft ist. Hierzu soll exemplarisch als Anwendungsfall der Betrieb einer Klimaanlage mittels eines Zwei-Wege-Infrarot-Übertragungsverfahrens vorgestellt werden. Bei einem derartigen System können sehr langsame Änderungen des Systemzustands auftreten - beispielsweise wird eine vom Benutzer vorgegebene Temperaturänderung (beispielsweise von 22 °C auf 25 °C) von der Klimaanlage nur sehr langsam vorgenommen -, so daß Unklarheiten über den wirklichen Zustand des Systems möglich sind. Bei der erfindungsgemäßen bidirektionalen Datenübertragung im Zwei-Wege-Modus werden jedoch-bei einer Betätigung der Fernbedienung - von der Klimaanlage alle aktuellen Daten - beispielsweise Timerdaten, Temperatur-Sollwert, Temperatur-Istwert, Filter-Timer, Ventilatoreinstellung, Kompressor, Heizung, Alarm, Test usw. - an den Benutzer gesendet und auf einem Display der Fernbedienung angezeigt, so daß sich der Benutzer jederzeit über den aktuellen Zustand der Klimaanlage informieren kann.

## Patentansprüche

1. Verfahren zum Betrieb eines Systems (3) mittels einer Fernbedienung (1), wobei die Datenübertragung zwischen dem System und der Fernbedienung bidirektional erfolgt, indem
• Steuerdaten, die die vom Bediener erwünschten Änderungen enthalten, von der Fernbedienung gespeichert und zum System gesendet werden,
• die Steuerdaten vom System empfangen, gespeichert und daraus Systemdaten generiert werden, die die Steuerdaten enthalten,
• die Systemdaten vom System zur Fernbedienung zurückgesendet werden,
• die Fernbedienung die in den Systemdaten enthaltenen Steuerdaten mit den in ihr gespeicherten Steuerdaten vergleicht,
dadurch gekennzeichnet, daß vom System zur Fernbedienung als Systemdaten aktuelle Systemwerte und die Steuerdaten zurückgesendet werden, und daß von der Fernbedienung bei der Erkennung auf Gleichheit der vom System zurückgesendeten Steuerdaten mit den in der Fernbedienung gespeicherten Steuerdaten ein Quittierungs-Kommando (ACK) an das System gesendet wird, das die Steuerdaten nicht enthält, und durch welches das System veranlaßt wird, die vom Bediener erwünschten Änderungen auszuführen.

2. Verfahren nach Anspruch 1, dadurch gekennzeichnet, daß die aktuellen Systemwerte mittels einer Anzeigevorrichtung im Geber der Fernbedienung (1) angezeigt werden.

3. Verfahren nach einem der Ansprüche 1 oder 2, dadurch gekennzeichnet, daß die bidirektionale Datenübertragung zwischen Fernbedienung (1) und System (3) bzw. System (3) und Fernbedienung (1) mittels einer Übertragungsstrecke (2) in Form von Datentelegrammen vorgenommen wird, wobei die Datentelegramme aus Pulsen bzw. Pulsfolgen einer vorgegebenen Trägerfrequenz aufgebaut sind, und daß über die Pulslänge der Trägerfrequenzpulse der jeweilige Bitwert codiert wird.

4. Verfahren nach Anspruch 3, dadurch gekennzeichnet, daß vom Geber der Fernbedienung (1) zum Sender (3) in Abhängigkeit des Status der Fernbedienung (1) unterschiedliche Geber-Datentelegramme gesendet werden.

5. Verfahren nach Anspruch 4, dadurch gekennzeichnet, daß als Geber-Datentelegramme entweder die Einschalt-Information, neue Steuerdaten für das System, oder ein Quittierungs-Kommando (ACK) gesendet werden.

6. Verfahren nach Anspruch 5, dadurch gekennzeichnet, daß bei einer Betätigung der Fernbedienung zum Einschalten des Systems oder zum Eingeben neuer Steuerdaten für das System, das entsprechende Geber-Datentelegramm mittels der Übertragungsstrecke (2) zum System (3) gesendet und von diesem ausgewertet und überprüft wird, daß das System-Datentelegramm mit den aktuellen Systemwerten mittels der Übertragungsstrecke (2) zum Geber der Fernbedienung (1) zurückgesendet und von diesem ausgewertet und überprüft wird, und daß vom Geber der Fernbedienung (1) bei fehlerfreier Datenübertragung das Quittierungs-Kommando (ACK) mittels der Übertragungsstrecke (2) zur Übernahme der übertragenen Daten des Geber-Datentelegramms an das System (3) gesendet wird.

7. Verfahren nach einem der Ansprüche 3 bis 6, dadurch gekennzeichnet, daß die Pulsfolgen der Datentelegramme vom System (3) bzw. vom Geber der Fernbedienung (1) mittels eines Empfängers (E), Filterglieds (F), Signalaufbereitungsteils (SA) und Rechners (µP) empfangen, gefiltert, ausgewertet, decodiert und kontrolliert werden.

8. Verfahren nach Anspruch 7, dadurch gekennzeichnet, daß die empfangenen und gefilterten Pulsfolgen der Datentelegramme vom Signalaufbereitungsteil (SA) integriert werden, wobei der Ausgangspegel des Signalaufbereitungsteils (SA) bei einem bestimmten Schwellwert umgeschaltet wird, und daß der Ausgangspegel in diesem Schaltzustand bleibt, bis vom Empfänger (E) keine Pulse mehr empfangen werden.

9. Verfahren nach Anspruch 8, dadurch gekennzeichnet, daß beim Umschalten des Ausgangspegels des Signalaufbereitungsteils (SA) im Rechner (µP) eine Interrupt-Routine ausgelöst wird, wodurch die mittels der Pulsfolgen übertragenen Daten eingelesen, geprüft, decodiert und ausgewertet werden.

10. Verfahren nach Anspruch 9, dadurch gekennzeichnet, daß die übertragenen Daten in einem Mikroprozessor (µP) abgespeichert werden.

11. Verfahren nach einem der Ansprüche 1 bis 10, dadurch gekennzeichnet, daß sich an jedes Zeitintervall (t₁, t₃, t₅, t₇), in dem eine Datenübertragung vorgenommen wird, ein Zeitintervall (t₂, t₄, t₆, t₈) anschließt, in dem vom jeweiligen Empfänger keine Daten empfangen werden dürfen.

12. Verfahren nach einem der Ansprüche 1 bis 11, dadurch gekennzeichnet, daß im Falle einer fehlerhaften Datenübertragung eine Rückmeldung vom empfangenden Teilnehmer zum sendenden Teilnehmer ausbleibt, und daß beim Ausbleiben der Rückmeldung der sendende Teilnehmer eine Wiederholung der Übertragung vornimmt.

13. Verfahren nach Anspruch 12, dadurch gekennzeichnet, daß beim Ausbleiben der Rückmeldung der sendende Teilnehmer eine zweimalige Wiederholung der Übertragung vornimmt.

14. Verfahren nach einem der Ansprüche 1 bis 13, dadurch gekennzeichnet, daß vom Geber der Fernbedienung (1) als Quittierungskommando drei aufeinanderfolgende Quittierungs- bzw. Acknowledge-Kommandos (ACK) an das System (3) gesendet werden, wobei das System (3) beim Erkennen eines Acknowledge-Kommandos (ACK) die weiteren ignoriert.

15. Verfahren nach einem der Ansprüche 1 bis 14, dadurch gekennzeichnet, daß die Datenübertragung im IR-Bereich erfolgt.

16. Verfahren nach Anspruch 15, dadurch gekennzeichnet, daß als Sender IR-Sendedioden und als Empfänger IR-Empfangsdioden vorgesehen sind.

17. Verfahren nach Anspruch 15 oder 16, dadurch gekennzeichnet, daß die Trägerfrequenz für die Datenpulse 400 kHz beträgt.

18. Verfahren nach einem der Ansprüche 1 bis 17 zur Steuerung einer Klimaanlage.

## Claims

1. Method of operating a system (3) by means of a remote control (1) wherein the transmission of data between the system and the remote control occurs in a bidirectional manner in that
- items of control data that include the changes desired by the user are stored in the remote control and transmitted to the system,
- the items of control data are received by and stored in the system, and items of system data, which include the items of control data, are generated therefrom,
- the items of system data are transmitted back by the system to the remote control,
- the remote control compares the items of control data included in the items of system data with the items of control data stored therein,
characterised in that, the items of system data transmitted back to the remote control by the system take the form of the items of control data and also the current system values and that an acknowledgement command (ACK), which does not contain the items of control data and by means of which the system is caused to execute the changes desired by the user, is transmitted to the system by the remote control when it detects equality between the items of control data re-transmitted by the system and the items of control data stored in the remote control.

2. Method in accordance with Claim 1, characterised in that, the current system values are displayed by means of a display device in the remote control transmitter (1).

3. Method in accordance with either of Claims 1 and 2, characterised in that, the bidirectional transmission of data between the remote control (1) and the system (3) or between the system (3) and the remote control (1) is effected in the form of data messages over a transmission path (2), wherein the data messages are built up from pulses or pulse trains having a predetermined carrier frequency and that the respective bit value is coded by means of the pulse length of the carrier frequency pulses.

4. Method in accordance with Claim 3, characterised in that, different remote control transmitter data messages are transmitted from the transmitter in the remote control (1) to the transmitter (3) in dependence on the status of the remote control (1).

5. Method in accordance with Claim 4, characterised in that, either switch-on information, new items of control data for the system or an acknowledgement command (ACK) are transmitted as remote-control-transmitter data messages.

6. Method in accordance with Claim 5, characterised in that, when the remote control is actuated in order to switch on the system or for the purposes of providing new items of control data to the system, the appropriate remote-control-transmitter data message is transmitted over the transmission path (2) to the system (3) where it is evaluated and checked, that the system data message containing the current system values is transmitted back over the transmission path (2) to the remote control transmitter (1) where it is evaluated and checked, and that, if the data transmission is free of errors, the acknowledgement command (ACK) is transmitted by the remote control transmitter (1) over the transmission path (2) to the system (3) which thereupon accepts the data contained in the data message transmitted by the remote control transmitter.

7. Method in accordance with any of the Claims 3 to 6, characterised in that, the pulse trains in the data message from the system (3) or from the transmitter in the remote control (1) are received, filtered, evaluated, decoded and checked by means of a receiver (E), a filter member (F), a signal processing section (SA) and a computer (µP).

8. Method in accordance with Claim 7, characterised in that, after being received and filtered, the pulse trains in the data message are integrated by the signal processing section (SA) whereby the output level of the signal processing section (SA) is switched over when a certain threshold level is reached and that the output level remains in this switching state until no more pulses are received in the receiver (E).

9. Method in accordance with Claim 8, characterised in that, when the output level of the signal processing section (SA) is switched over, an interrupt routine is initiated in the computer (API whereupon the data transmitted by means of the pulse trains is read, checked, decoded and evaluated.

10. Method in accordance with Claim 9, characterised in that, the transmitted data is stored in a microprocessor (µP).

11. Method in accordance with any of the Claims 1 to 10, characterised in that, a time interval (t₂, t₄, t₆, t₈), in which data may not be received by the relevant receiver, follows each time interval (t₁, t₃, t₅, t₇) during which a data transmission takes place.

12. Method in accordance with any of the Claims 1 to 11, characterised in that, in the event of an error prone data transmission, there is no reply message from the receiving unit to the transmitting unit and that, in the event that the reply message is not forthcoming, the transmitting unit effects a repetition of the transmission.

13. Method in accordance with Claim 12, characterised in that, in the event that the reply message is not forthcoming, the transmitting unit twice effects a repetition of the transmission.

14. Method in accordance with any of the Claims 1 to 13, characterised in that, three successive acknowledgements or acknowledge commands (ACK) are transmitted as an acknowledgement command to the system (3) by the transmitter in the remote control (1), whereby the system (3) ignores the other acknowledge commands (ACK) once it has recognised one of them.

15. Method in accordance with any of the Claims 1 to 14, characterised in that, the data transmission occurs in the IR band.

16. Method in accordance with Claim 15, characterised in that, IR emitting diodes are provided as transmitters and IR receiving diodes as receivers.

17. Method in accordance with Claim 15 or 16, characterised in that, the carrier frequency for the data pulses is 400 kHz.

18. Method in accordance with any of the Claims 1 to 17 for controlling an air conditioning system.

## Revendications

1. Procédé d'utilisation d'un système (3) au moyen d'une télécommande (1), la transmission de données entre le système et la télécommande s'effectuant de façon bidirectionnelle, selon lequel
- des données de commande, qui contiennent des modifications souhaitées par l'utilisateur, sont mémorisées par la télécommande et émises en direction du système,
- les données de commande sont reçues, mémorisées par le système et de là, des données de système sont générées qui contiennent les données de commande,
- les données de système sont réémises depuis le système vers la télécommande,
- la télécommande compare les données de commande contenues dans les données de système aux données de commande mémorisées dans celles-ci,
caractérisé en ce que des valeurs réelles du système et les données de commande sont réémises depuis le système vers la télécommande en tant que données de système, et en ce que, par la télécommande, dans le cas de la constatation de l'égalité des données de commande réémises par le système avec les données de commande mémorisées dans la télécommande, une instruction de confirmation (ACK) est envoyée au système, qui ne contient pas les données de commande, et grâce à laquelle le système est autorisé à effectuer les modifications souhaitées par l'utilisateur.

2. Procédé selon la revendication 1, caractérisé en ce que les valeurs réelles de système sont indiquées au moyen d'un dispositif d'affichage dans l'émetteur de la télécommande (1).

3. Procédé selon l'une des revendications 1 ou 2, caractérisé en ce que la transmission bidirectionnelle de données entre la télécommande (1) et le système (3) ou le système (3) et la télécommande (1) est effectuée au moyen d'une voie de transmission (2) sous la forme de télégramme de données, les télégrammes de données étant constitués d'impulsions ou de trains d'impulsions de fréquence porteuse prescrite, et en ce que, par l'intermédiaire de la longueur d'impulsion de l'impulsion de la fréquence porteuse,est codée la valeur respective de bit.

4. Procédé selon la revendication 3, caractérisé en ce que, depuis l'émetteur de la télécommande (1) vers le système (3) sont émis différents télégrammes de données d'émetteur en fonction de l'état de la télécommande (1).

5. Procédé selon la revendication 4, caractérisé en ce qu'en tant que télégrammes de données d'émetteur sont émises soit l'information de mise de marche, de nouvelles données de commande pour le système, soit une instruction de confirmation (ACK).

6. Procédé selon la revendication 5, caractérisé en ce que, dans le cas d'une manoeuvre de la télécommande en vue de la mise en marche du système ou de l'introduction de nouvelles données de commande pour le système, est émis le télégramme de données d'émetteur correspondant au moyen de la voie de transmission (2) vers le système (3) et est évalué et vérifié par celui-ci, en ce que le télégramme de données de système est réuni avec les valeurs de système réelles au moyen de la voie de transmission (2) vers l'émetteur de la télécommande (1) et est évalué et vérifié par celui-ci et en ce que, par l'émetteur de la télécommande (1) dans le cas d'une transmission sans erreur de données, l'instruction de confirmation (ACK) est émise au moyen de la voie de transmission (2) en vue de l'incorporation des données transmises du télégramme de données de l'émetteur au système (3).

7. Procédé selon l'une quelconque des revendications 3 à 6, caractérisé en ce que les trains d'impulsions du télégramme de données du système (3) ou de l'émetteur de la télécommande (1) sont reçus, filtrés, évalués, décodés et contrôlés au moyen d'un récepteur (E), d'un filtre (F), d'une partie d'établissement de signaux (SA) et d'un calculateur (µP).

8. Procédé selon la revendication 7, caractérisé en ce que les trains d'impulsions reçus et filtrés du télégramme de données sont intégrés par la partie d'établissement de signaux (SA), le seuil de sortie de la partie d'établissement de signaux (SA) est commuté pour une valeur de seuil prédéterminée, et en ce que le niveau de sortie demeure dans cet état de commutation, jusqu'à ce qu'aucune impulsion ne soit plus reçue par le récepteur (E).

9. Procédé selon la revendication 8, caractérisé en ce que, lors de la commutation du niveau de sortie de la partie d'établissement de signaux (SA) dans le calculateur (µP), un programme d'interruption est déclenché, par lequel les données transmises au moyen des trains d'impulsions sont lues, vérifiées, décodées et évaluées.

10. Procédé selon la revendication 9, caractérisé en ce que les données transmises sont mémorisées dans un microprocesseur (µP).

11. Procédé selon l'une quelconque des revendications 1 à 10, caractérisé en ce qu'à chaque intervalle de temps (t₁, t₃, t₅, t₇) dans lequel est effectuée une transmission de données, est raccordé un intervalle de temps (t₂, t₄, t₆, t₈), durant lequel aucune donnée ne peut être reçue du récepteur respectif.

12. Procédé selon l'une quelconque des revendications 1 à 11, caractérisé en ce que, dans le cas d'une transmission de données erronée, une indication en retour de la partie réceptrice vers la partie émettrice manque, et en ce que, dans le cas du manque de l'indication en retour, la partie émettrice effectue une répétition de la transmission.

13. Procédé selon la revendication 12, caractérisé en ce que, dans le cas de l'absence de l'indication en retour, la partie émettrice effectue deux fois une répétition de la transmission.

14. Procédé selon l'une quelconque des revendications 1 à 13, caractérisé en ce que, par l'émetteur de la télécommande (1), sont émises en tant qu'instruction de confirmation trois instructions successives de confirmation (ACK) vers le système (3), le système (3) dans le cas de la reconnaissance d'une instruction de confirmation (ACK) ignorant les autres.

15. Procédé selon l'une quelconque des revendications 1 à 14, caractérisé en ce que la transmission de données s'effectue dans le domaine IR.

16. Procédé selon la revendication 15, caractérisé en ce qu'en tant qu'émetteur sont prévues des diodes émettrices IR et en tant que récepteur des diodes réceptrices IR.

17. Procédé selon la revendication 15 ou 16, caractérisé en ce que la fréquence porteuse pour les données d'impulsion s'élève à 400 kHz.

18. Procédé selon l'une quelconque des revendications 1 à 17, en vue de la commande d'une installation de climatisation.
